# EUROPEAN PATENT APPLICATION

(11) **EP 1 427 227 A2**
(43) Date of publication of application: **09.06.2004**
(21) Application number: 04002778.1
(22) Date of filing: 08.01.2002
(51) Int. Cl.: H04Q 7/22, H04B 7/26

(54) **Packet data transmission within a broad-band communication system**

(30) Priority: 12.01.2001 US 760039
(62) Divisional of application: 02000448.7
(71) Applicant: MOTOROLA, INC., Schaumburg, IL 60196 (US)
(72) Inventor: Rinchiuso, Joseph, Elmhurst Illinois 60126 (US); Smolinske, Jeffrey C., -316, Schaumburg Illinois 60173 (US); Black, Jyoti Nair, St. Charles Illinois 60175 (US)
(74) Representative: McCormack, Derek James

(57) **Abstract**

During data transmission to a remote unit (113) utilizing a supplemental, highspeed data channel (105), data transmission stops due to all data being communicated to the remote unit (113) or because a time period for transmission has expired. In the situation where all data has been transmitted to the remote unit (113) the remote unit (113) will delay dropping the data channel (105) for a predetermined period of time. In the situation where a time period for transmission has expired, the remote unit (113) will continue transmitting into a frame assigned to another remote unit.

## Description

### Field of the Invention

The present invention relates generally to cellular communication systems and, in particular, to data transinission within a cellular communication system.

### Background of the Invention

Communication systems are well known and consist of many types including land mobile radio, cellular radiotelephone, personal communication systems, and other communication system types. Within a communication system, transmissions are conducted between a transmitting device and a receiving device over a communication resource, commonly referred to as a communication channel. To date, the transmissions have typically consisted of voice signals. More recently, however, it has been proposed to carry other forms of signals, including high-speed data signals. For ease of operation, it is preferable to have the data transmission capability overlay the existing voice communication capability, such that its operation is essentially transparent to the voice communication system while still utilizing the communication resources and other infrastructure of the voice communication system.

One such communication system currently being developed with transparent data transmission capabilities is the next generation Code-Division Multiple-Access (CDMA) cellular communication system, more commonly referred to cdma2000. Within such a communication system all remote unit and base station transmissions occur simultaneously within the same frequency band. Therefore, a received signal at a base station or remote unit comprises a multiplicity of frequency and time overlapping coded signals from individual remote units or base stations, respectively. Each of these signals is transmitted simultaneously at the same radio frequency (RF) and is distinguishable only by its specific encoding (channel). In other words, the signal received at a base-station or remote unit receiver is a composite signal of each transmitted signal and an individual signal is distinguishable only after decoding.

Remote unit data transmission within a cdma2000 communication system takes place by assigning the remote unit a high-speed data channel (referred to as a supplemental channel) and transmitting data as discussed above utilizing the supplemental channel. More specifically, during data transmission (referred to as an Active state) both a supplemental, and a dedicated control channel are allocated to the remote unit. Once data transmission is complete, the supplemental channel is dropped and the remote unit enters a Control Hold State where the dedicated control channel only is assigned. When more data is to be transmitted to the user, the user will move (bounce) back to the Active state. Users moving from the Control Hold state to the Active state will experience a delay (typically around 200 msec) prior to when data transmission can resume. When TCP/IP is utilized, the transition delay will degrade data transmission performance do to the inherent backoff algorithm within TCP. Therefore a need exists for a method and apparatus for data transmission within a communication system that minimizes the number of times a user moves from a Control Hold state to an Active state.

### Brief Description of the Drawings

FIG. 1 is a block diagram of a base station for transmitting data in accordance with the preferred embodiment of the present invention.
FIG. 2 illustrates data transmission in accordance with the preferred embodiment of the present invention.
FIG. 3 is a block diagram of fundamental channel circuitry of FIG. 1 in accordance with the preferred embodiment of the present invention.
FIG. 4 is a block diagram of supplemental channel circuitry of FIG. 1 for transmitting data in accordance with the preferred embodiment of the present invention.
FIG. 5 is a flow chart illustrating transmission of data in accordance with the preferred embodiment of the present invention.
FIG. 6 is a flow chart illustrating transmission of data in accordance with an alternate embodiment of the present invention.

### Detailed Description of the Drawings

To overcome the problems described above, during data transmission to a remote unit utilizing a supplemental, high-speed data channel, data transmission stops due to all data being communicated to the remote unit, or because a time period for transmission has expired. In the situation where all data has been transmitted to the remote unit the remote unit will delay dropping the data channel for a predetermined period of time. In the situation where a time period for transmission has expired, the remote unit will continue transmitting into a frame assigned to another remote unit.

By delaying the instruction to tear down the supplemental channel, base station 100 can automatically transfer more data to remote unit 113 if new data arrives for remote unit 113 during the delay period. Thus, during the delay period, if new data arrives for remote unit 113, the remote unit does not have to change from the Control Hold state to the Active state, greatly reducing the bouncing effect described above.

The present invention encompasses a method for data transmission within a wireless communication system. The method comprises the steps of transmitting data over a wireless data channel at a data rate, determining that no more data needs to be transmitted, and delaying dropping the data channel for a time period based on the data rate.

The present invention additionally encompasses a method for data transmission within a Code Division, Multiple Access (CDMA) wireless communication system. The method comprises the steps of operating a data transmitter in a CDMA Active state and determining that no more data needs to be transmitted over a CDMA supplemental channel. Prior to operating the data transmitter in a Control Hold state, transition to the Control Hold state is delayed for a period of time. In the preferred embodiment of the present invention the period of time is based on a data rate.

The present invention additionally encompasses an apparatus comprising channel circuitry for transmitting data, and a timer coupled to the channel circuitry, wherein the timer delays deactivation of the channel circuitry after data transmission for a period of time, wherein the period of time is based on a data rate.

The present invention additionally encompasses a method for data transmission within a wireless communication system. The method comprises the steps of transmitting data to a first receiver over a first plurality of frames on a data channel, wherein the first plurality of frames are assigned to the first receiver, and transmitting data to the first receiver, over a frame on the data channel for a period of time. In the preferred embodiment of the present invention the frame is assigned to a second receiver, the frame is not part of the first plurality of frames, and the period of time is based on a time to transfer from a hold state to an active state. Second data is then transmitted to a second receiver over the frame.

The present invention additionally encompasses a method for data transmission within a wireless communication system. The method comprises the steps of receiving data via a first receiver from over a first plurality of frames on a data channel, wherein the first plurality of frames are assigned to the first receiver, and receiving data via the first receiver, over a frame on the data channel for a period of time. In the preferred embodiment of the present invention, the frame is assigned to a second receiver, the frame is not part of the first plurality of frames, and the period of time is based on a time to transfer from a hold state to an active state.

The present invention additionally encompasses an apparatus for data transmission within a wireless communication system, the apparatus comprising means for transmitting data over a first plurality of frames on a data channel, wherein the first plurality of frames are assigned to the first receiver, and means for transmitting data over a frame on the data channel for a period of time. In the preferred embodiment of the present invention the frame is assigned to a second receiver and the frame is not part of the first plurality of frames.

The present invention additionally encompasses a method for data transmission within a General Packet Radio Service (GPRS) communication system. The method comprises the steps of establishing a temporary block flow (TBF) between a transmitting device and a receiving device to transmit data over a data channel, determining that no more data needs to be transmitted to the receiving device and delaying termination of the TBF by transmitting dummy data over the data channel.

The present invention additionally encompasses a base station or a mobile unit comprising means for establishing a temporary block flow (TBF) between a transmitting device and a receiving device to transmit data over a data channel, means for determining that no more data needs to be transmitted to the receiving device, and means for delaying termination of the TBF by transmitting dummy data over the data channel.

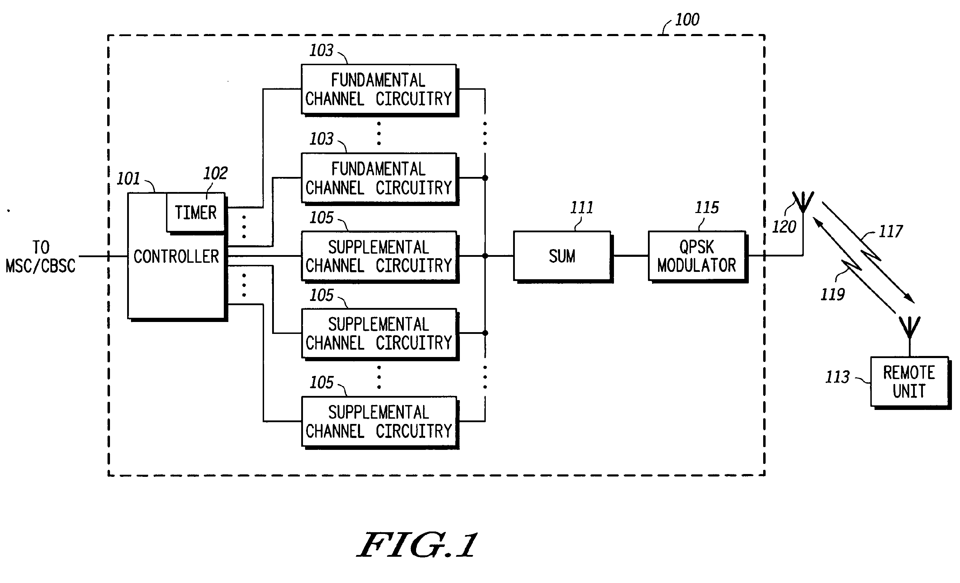

FIG. 1 is a block diagram of base station 100 for transmitting data to remote unit 113 in accordance with the preferred embodiment of the present invention. Base station 100 comprises controller 101, timer 102, multiple fundamental channel circuits 103, one or more supplemental channel circuits 105, summer 111, and modulator 115. As shown, base station 100 is communicating to remote unit 113 via downlink communication signal 117, and remote unit 113 is communicating to base station 100 via uplink communication signal 119.

In the preferred embodiment of the present invention, communication to/from remote unit 113 may take place utilizing the supplemental channel circuitry 105 and/or fundamental channel circuitry 103. In particular, base station 100 and remote unit 113 utilize two classes of channels defined for both forward and reverse transmission. The description of the preferred embodiments will be provided with data transmission taking place from base station 100 to remote unit 113, however, one of ordinary skill in the art will recognize that data transmission may take place in a similar manner from remote unit 113 to base station 100 without departing from the spirit and scope of the present invention.

In the preferred embodiment, the fundamental channels also known as the dedicated channels are similar to existing CDMA traffic channels and are used for voice, data, and signaling.. CDMA traffic channels are described in detail in cdma2000 Standards for Spread Spectrum Systems, Telecommunications Industry Association Standard IS-2000 (often referred to as cdma2000 or IS95C), Washington, DC June 1999 which is incorporated by reference herein. As described in IS-95C, the transmission rate of this channel may vary dynamically. Additionally, soft handoff (simultaneous communication utilizing more than one fundamental channel circuit 103) is supported utilizing fundamental channel circuitry 103.

In contrast, the supplemental channels are utilized for communicating high data rate services to remote unit 113, with the data rate of the supplemental channels being negotiated prior to transmission. Multiple data sources are time multiplexed on this channel. In addition, the Quality-of-Service (e.g., Frame Error Rate (FER), Bit Error Rate (BER) and/or Transmission Delay) of this channel may be set and operated independently of the fundamental channel.

Data transmission from base station 100 in accordance with the preferred embodiment of the present invention occurs as follows: During time periods where remote unit 113 is not actively communicating to base station 100 utilizing either a fundamental or a supplemental channel, remote unit 113 is in a suspended state, actively or periodically monitoring a forward control channel (IS-95C paging channel) for notification of any pending transmission by base station 100. In particular, paging channel circuitry (not shown) is utilized to send messages to remote unit 113 indicating pending downlink transmissions. In the preferred embodiment of the present invention, paging channels circuitry is described in IS-95C. Base station 100 determines that a high data rate transmission to remote unit 113 needs to take place and determines if supplemental channel circuitry 105 is available for utilization. Due to the limited number of supplemental channels available for communication, a supplemental channel may not be available for transmission to remote unit 113. Because of this, remote unit 113 will be placed in a queue until supplemental channel circuitry 105 is available for transmission. Whether or not remote unit 113 is placed in a queue, remote unit 113 is placed in a Control Hold state where it is assigned a fundamental channel or a dedicated control channel. In particular, base station 100 notifies remote unit 113 of spreading codes (Walsh Codes) utilized by the fundamental and supplemental channels and an assigned data rate of the supplemental channel. Additionally, initial power control takes place at this point utilizing the fundamental channel as described in IS-95C .

Once at the appropriate power level, and when a supplemental channel becomes available, remote unit 113 enters an Active State, where communication utilizing the supplemental channel (i.e., data transmission) occurs. In particular, supplemental channel circuitry 105 assigned to remote unit 113 outputs data to be transmitted to summer 111, where it is summed with other channel transmissions. The resulting summed transmissions are then QPSK modulated by modulator 115, and transmitted to remote unit 113 via downlink communication signal 117.

Transmission on the supplemental channel may stop, *inter alia,* for two reasons. Firstly, all data has been communicated to remote unit 113. In this situation, remote unit 113 will perform an acknowledgment of the last frames transmitted. In particular, error control takes place either by Acknowledging (ACK) packets that have been received and/or by providing a Negative Acknowledgement (NAK) for messages whose sequence number has not been received even though later numbered messages have been received. (Note that if NAK procedures are used, the successful reception of the last packet must be acknowledged even if the protocol uses NAK only procedures during the rest of the data transmission).

In accordance with the preferred embodiment of the present invention prior to sending remote unit 113 a message to tear down the supplemental channel, base station 100 will delay (by X) the sending of a teardown message. If, during the delay period, no more data is to be transmitted to remote unit 113, a teardown message will be sent to remote unit 113 instructing remote unit 113 to drop the supplemental channel and proceed to a Control Hold state.

By delaying the instruction to tear down the supplemental channel, base station 100 can automatically transfer more data to remote unit 113 if new data arrives for remote unit 113 during the delay period. Thus, during the delay period, if new data arrives for remote unit 113, the remote unit does not have to change from the Control Hold state to the Active state, greatly reducing the bouncing effect described above.

Although the preferred embodiment was described with respect to transmission from a base station to a mobile, or remote unit, the above invention may be applied to transmission from the remote unit to the base station. In that case, after transmitting data to base station 100, remote unit 113 will delay tearing down the channel by a delay period (X).

In an alternate embodiment of the present invention, the delay period (X) is varied based on the data transmission rate. More particularly, as the data rate increases, the delay will increase proportionally. In the preferred embodiment of the present invention a delay of 200 msec is used for average data rates of 19 KBPS. The delay period is increased linearly to 500 msec for data rates of 100 KBPS. Varying the delay period in proportion to the data transmission rate, can cut down on the bouncing effect, while minimizing the time period a remote unit needlessly holds the supplemental channel. For example, during slow data rate transmission, data will have a higher probability of "piling up" at the transmitting end. Therefore, after transmission of data to a remote unit, the chances are great that if more data were to be transmitted to the remote unit, it would have already been buffered at the base station. Thus low delay periods can be used. Conversely, for high data-rate situations, very little buffering of data takes place at the base station, and there is a greater probability that more data may need to be transmitted to the remote unit. Therefore, greater delay times are necessary.

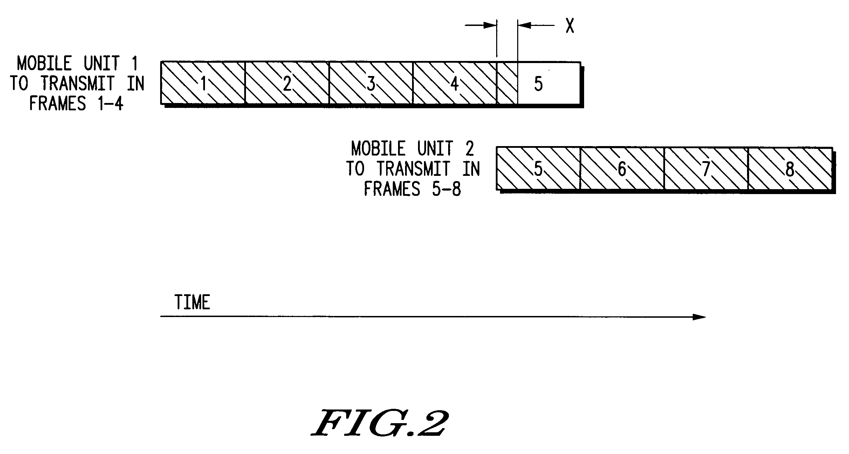

A second reason for ceasing transmission on the supplemental channel is because transmission utilizing the supplemental channel has exceeded an allotted time period (or number of frames). For example, when sharing the supplemental channel, remote units may be allocated a certain number of frames for data transmission. After the period of transmission ends, the remote unit typically drops the channel so a second remote unit may utilize the channel for their data transmission needs. In this situation the second remote unit moves from a Control Hold state to the Active state. However, as discussed above, the changing from Control Hold to Active, typically takes a period of time. In the preferred embodiment of the present invention, the first remote unit will continue transmitting during this time period. This situation is illustrated in FIG. 2.

As shown in FIG. 2, a first mobile unit is assigned to transmit in frames 1-4, however, the first mobile unit will continue to transmit into frame 5 (assigned to a second mobile unit). Therefore, both the first and the second mobile units transmit during the same frame on the same supplemental channel, however the first mobile unit will transmit only during the frame. One might suspect that both the first and the second mobile units will be actively transmitting during the same frame on the same channel. However, as discussed above, it takes a period of time to transition from the Control Hold state to the Active state. Therefore, it is impossible for the second mobile unit to begin transmitting of frame 5.

Thus, in accordance with the preferred embodiment of the present invention the first remote unit will continue transmitting for a time period (X) or number of frames (X) after its assigned frames have passed. In this case, the time period is based on how long or how many frames it takes to move from the Control Hold state to the Active state, since X must be less than this time period or number of frames

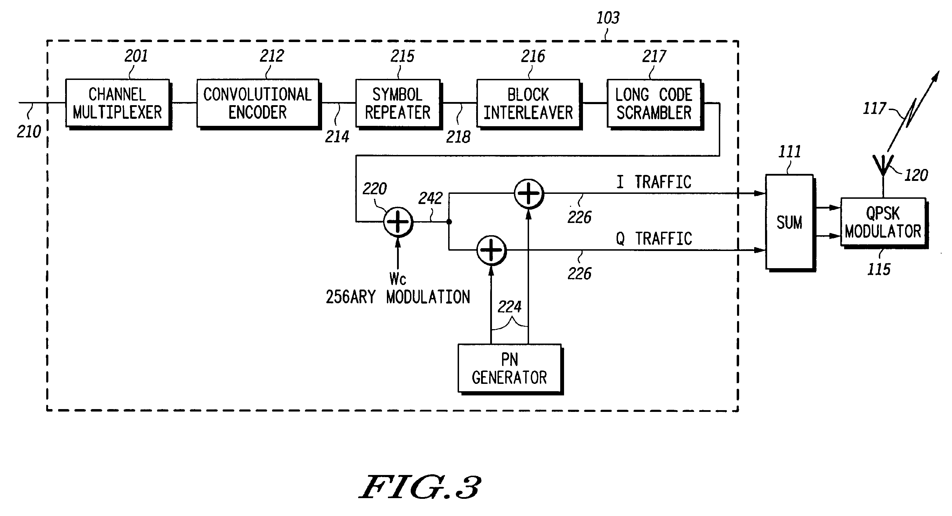

FIG. 3 is a block diagram of fundamental channel circuitry of FIG. 1 in accordance with the preferred embodiment of the present invention. Fundamental channel circuitry 103 includes channel multiplexer 201, convolutional encoder 212, symbol repeater 215, block interleaver 216, long code scrambler 217, and orthogonal encoder 220. During operation, signal 210 (traffic channel data bits) is received by channel multiplexer 201 at a particular bit rate (e.g., 8.6 kbit/second). Input traffic channel data 210 bits typically include voice converted to data by a vocoder, pure data, or a combination of the two types of data. Channel multiplexer 201 multiplexes secondary traffic (e.g., data), and/or signaling traffic (e.g. control or user messages) onto the traffic channel data 210 and outputs the multiplexed data at 9.6 kbit/sec to convolutional encoder 212. Convolutional encoder 212 encodes input data bits 210 into data symbols at a fixed encoding rate with an encoding algorithm which facilitates subsequent maximum likelihood decoding of the data symbols into data bits (e.g. convolutional or block coding algorithms). For example, convolutional encoder 212 encodes input data bits 210 (received at a rate of 9.6 kbit/second) at a fixed encoding rate of one data bit to two data symbols (i.e., rate 1/3) such that convolutional encoder 212 outputs data symbols 214 at a 28.8 ksymbol/second rate.

Data symbols 214 are then repeated by repeater 215 and input into interleaver 216. Interleaver 216 interleaves the input data symbols 214 at the symbol level. In interleaver 216, data symbols 214 are individually input into a matrix which defines a predetermined size block of data symbols 214. Data symbols 214 are input into locations within a matrix so that the matrix is filled in a column by column manner. Data symbols 214 are individually output from locations within the matrix so that the matrix is emptied in a row by row manner. Typically, the matrix is a square matrix having a number of rows equal to the number of columns; however, other matrix forms can be chosen to increase the output interleaving distance between the consecutively input non-interleaved data symbols. Interleaved data symbols 218 are output by interleaver 216 at the same data symbol rate that they were input (e.g., 28.8 ksymbol/second). The predetermined size of the block of data symbols defined by the matrix is derived from the maximum number of data symbols which can be transmitted at a predetermined symbol rate within a predetermined length transmission block. For example, if the predetermined length of the transmission block is 20 milliseconds, then the predetermined size of the block of data symbols is 28.8 ksymbol/second times 20 milliseconds which equals 576 data symbols which defines a 18 by 32 matrix.

Interleaved data symbols 218 are scrambled by scrambler 217 and output to orthogonal encoder 220. Orthogonal encoder 220 modulo 2 adds an orthogonal code (e.g., a 256-ary Walsh code) to each interleaved and scrambled data symbol 218. For example, in 256-ary orthogonal encoding, interleaved and scrambled data symbols 218 are each exclusive OR'd by a 256 symbol orthogonal code. These 256 orthogonal codes preferably correspond to Walsh codes from a 256 by 256 Hadamard matrix wherein a Walsh code is a single row or column of the matrix. Orthogonal encoder 220 repetitively outputs a Walsh code which corresponds to input data symbol 218 at a fixed symbol rate (e.g., 28.8 ksymbol/second).

Sequence of Walsh codes 242 are further spread by a pair of short pseudorandom codes 224 (i.e. short when compared to the long code) to generate an I-channel and Q-channel code spread sequence 226. The I-channel and Q-channel code spread sequences 226 are used to bi-phase modulate a quadrature pair of sinusoids by driving the power level controls of the pair of sinusoids. The sinusoids output signals are summed, QPSK modulated (by modulator 115) and radiated by antenna 120 to complete transmission of channel data bits 210. In the preferred embodiment of the present invention, spread sequences 226 are output at a rate of 3.6864 Mega Chips per second (Mcps) and radiated within a 5 MHz bandwidth, but in alternate embodiments of the present invention, spread sequences 226 may be output at a different rate and radiated within a different bandwidth. For example, in an alternate embodiment of the present invention an IS-95C transmission scheme may be utilized where spread sequences 226 are output at a rate of 1.2288 Mcps (traffic channel chip rate) within a 1.25 MHz bandwidth. Because each data symbol is exclusive OR'd by a 128 symbol orthogonal code, the actual input data symbol transmission rate (at step 218) is 19.2 Kcps (utilizing a ½ convolutional encoder).

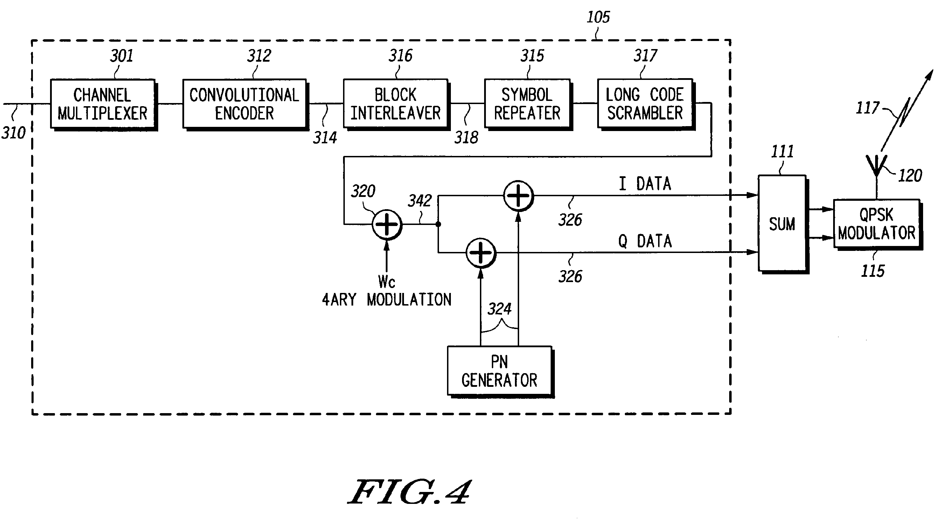

FIG. 4 is a block diagram of supplemental channel circuitry 105 of FIG. 1 for transmitting data in accordance with the preferred embodiment of the present invention. Supplemental channel circuitry 105 includes channel multiplexer 301, convolutional encoder 312,symbol repeater 315, block interleaver 316, and orthogonal encoder 320. During operation, signal 310 (data) is received by channel multiplexer 301 at a particular bit rate (e.g., 152.4 kbit/second). Channel multiplexer 301 multiplexes secondary traffic (e.g., user data) onto the supplemental channel data 310 and outputs the multiplexed data to convolutional encoder 312 at 153.6 kb/s.

Convolutional encoder 312 encodes input data bits 310 into data symbols at a fixed encoding rate with an encoding algorithm which facilitates subsequent maximum likelihood decoding of the data symbols into data bits (e.g. convolutional or block coding algorithms). For example, convolutional encoder 312 encodes input data bits 310 (received at a rate of 153.6 kbit/second) at a fixed encoding rate of one data bit to two data symbols (i.e., rate 1/3) such that convolutional encoder 312 outputs data symbols 314 at a 460.8 kbit/second rate.

Data symbols 314 are then input into interleaver 316. Interleaver 316 interleaves the input data symbols 314 at the symbol level. In interleaver 316, data symbols 314 are individually input into a matrix which defines a predetermined size block of data symbols 314. Data symbols 314 are input into locations within a matrix so that the matrix is filled in a column by column manner. Data symbols 314 are individually output from locations within the matrix so that the matrix is emptied in a row by row manner. Typically, the matrix is a square matrix having a number of rows equal to the number of columns; however, other matrix forms can be chosen to increase the output interleaving distance between the consecutively input non-interleaved data symbols. Interleaved data symbols 318 are output by interleaver 316 at the same data symbol rate that they were input (e.g., 460.8 ksymbol/second). The predetermined size of the block of data symbols defined by the matrix is derived from the maximum number of data symbols which can be transmitted at a predetermined symbol rate within a predetermined length transmission block. For example, if the predetermined length of the transmission block is 20 milliseconds, then the predetermined size of the block of data symbols is 9.216 ksymbols.

Interleaved data symbols 318 are repeated by repeater 315 and output to orthogonal encoder 320. Orthogonal encoder 320 modulo 2 adds an orthogonal code (e.g., a 16-ary Walsh code) to each interleaved and scrambled data symbol 318. For example, in 16-ary orthogonal encoding, interleaved and scrambled data symbols 318 are each exclusive OR'd by a 16 symbol orthogonal code. These 16 orthogonal codes preferably correspond to Walsh codes from a 16 by 16 Hadamard matrix wherein a Walsh code is a single row or column of the matrix. Orthogonal encoder 320 repetitively outputs a Walsh code or its inverse which corresponds to input data symbol 318 at a fixed symbol rate (e.g., 460.8 ksymbol/second).

Sequence of weighted Walsh codes 342 are further spread by a pair of short pseudorandom codes 324 (i.e. short when compared to the long code) to generate an I-channel and Q-channel code spread sequence 326. The I-channel and Q-channel code spread sequences 326 are used to bi-phase modulate a quadrature pair of sinusoids by driving the power level controls of the pair of sinusoids. The sinusoids output signals are summed, QPSK modulated (by modulator 115) and radiated by antenna 120 to complete transmission of channel data bits 310. In the preferred embodiment of the present invention, spread sequences 326 are output at 3.6864 Mcps and radiated within a 5 MHz bandwidth.

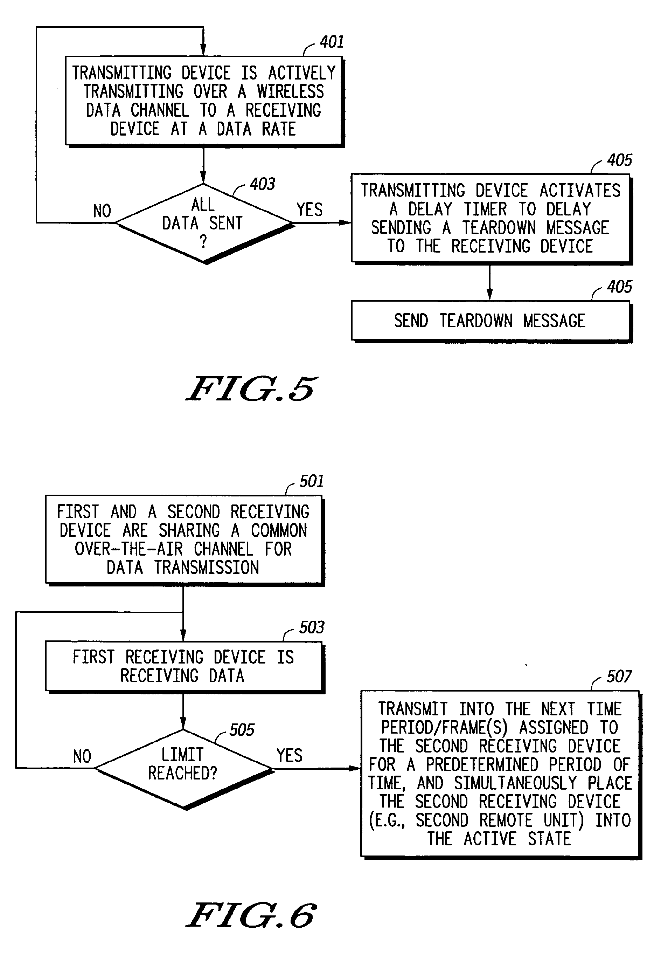

FIG. 5 is a flow chart illustrating transmission of data in accordance with the preferred embodiment of the present invention. The logic flow begins at step 401 where a transmitting device is actively transmitting (CDMA Active state) over a wireless data channel (e.g., CDMA supplemental channel) to a receiving device at a data rate. As described above, the transmitting and receiving device may be a base stations transmitting to a remote/mobile unit, or vice versa. Additionally, data transmission takes place via an over-the-air protocol such as a CDMA/GSM over the air protocol. At step 403, the transmitting device determines if all data has been transmitted to the receiving device, and if not, the logic flow returns to step 401. If, however, at step 403 it is determined that all data has been transmitted, the logic flow continues to step 405. At step 405, the transmitting device activates a delay timer 102 to delay sending a teardown message to the receiving device. As discussed above, delay timer 102 may, or may not generate a time length based upon a data transmission rate. After delay timer 102 has expired, a teardown message is sent to the receiving device (step 407) placing the transmitter in a Control Hold state.

As discussed above, by delaying the instruction to tear down the supplemental channel, transmitting device can automatically transfer more data to receiving device if new data arrives for the receiving device during the delay period. Thus, during the delay period, if new data arrives, the receiving device does not have to change from the Control Hold state to the Active state, greatly reducing the bouncing effect.

FIG. 6 is a flow chart illustrating transmission of data in accordance with an alternate embodiment of the present invention. The logic flow begins at step 501 where a first and a second receiving device are sharing a common over-the-air channel for data transmission. Each receiving device is allocated a certain time period, or number of frames, in which to transmit and receive data. At step 503 a first receiving device (e.g., a remote unit) is receiving data from a transmitting device (e.g., a base station). Next, at step 505, the base station determines if the remote unit has reached the time limit, or frame limit for data transmission. If, at step 505 it is determined that the remote unit has not reached the end of its time/frame limit for data transmission, the logic flow returns to step 503, otherwise the logic flow continues to step 507. At step 507, the base station continues to transmit into the next time period/frame(s) assigned to the second receiving device for a predetermined period of time, and simultaneously places the second receiving device (e.g., second remote unit) into the Active state.

Therefore, both the first and the second remote units transmit during the same frame/time on the shared channel, however the base station will transmit to the first remote unit for a predetermined time period (X) into the overlapping time/frame. As discussed above, one might suspect that both the first and the second mobile units will be actively transmitting during the same frame on the same channel. However, it takes a period of time to transition from the Control Hold state to the Active state. It is during this time period only, that the first remote unit will continue to receive data. Thus, in accordance with the preferred embodiment of the present invention the first remote unit will continue transmitting for a time period (X) after its assigned frames have passed. In this case, the time period is based on how long it takes to move from the Control Hold state to the Active state, since X must be less than this time period.

Although the above embodiments were described as implemented in a CDMA communication system, one of ordinary skill in the art will recognize that the above invention may be applied to other communication system protocols as well. The following text describes implementation in a Global System for Mobile communications (GSM) system utilizing General Packet Radio Service (GPRS) for data communication.

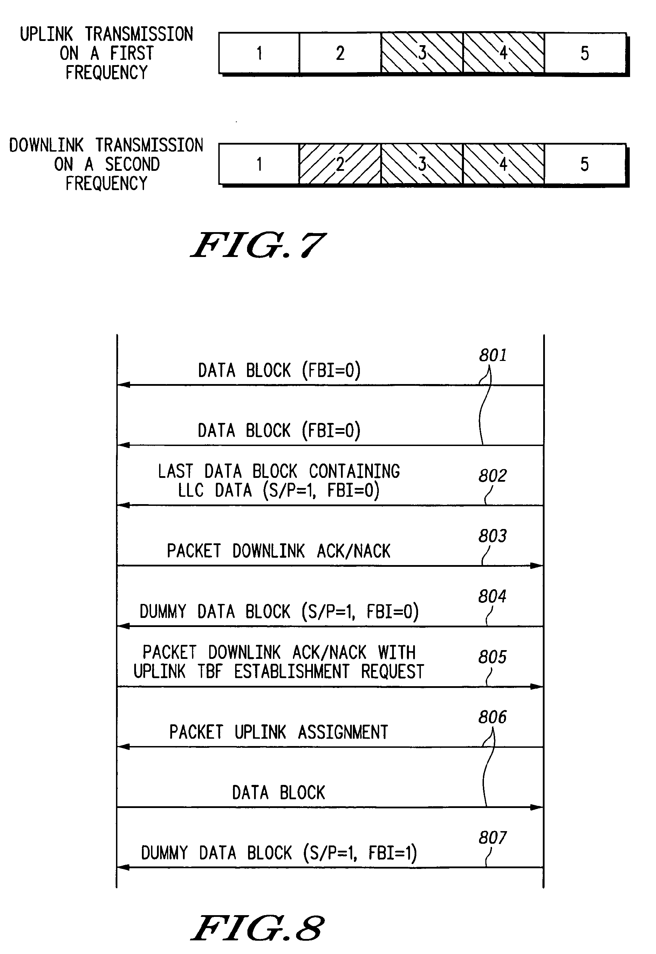

In GPRS, a Temporary Block Flow (TBF) is created for transferring data packets on a packet data channel. The TBF is a logical connection used by two mutually communicating Radio Resource (RR) peer entities to support the unidirectional transfer of Logical Link Control (LLC) packet Dada Units (PDU) from upper Logical Link Control (LLC) layers on physical channels for packet data. In a GPRS system, multiple remote units transmit data on a particular frequency, during a plurality of time slots. Data transmission for a GPRS system is illustrated in FIG. 7. As shown, multiple remote units will share a first group of timeslots for uplink transmission, and a second group of timeslots for downlink transmission. Because only a single remote unit may transmit or receive information at the same time, transmission and reception of data over the high-speed data channel is regulated. Within the GPRS system, the physical data channels are not torn down as in a CDMA system. The data channel remains active, with multiple users sharing access to the channel. More particularly, any user who desires to transmit/receive data will be assigned a logical channel that will utilize the physical data channels.

During termination of a TBF the transmitting entity (i.e., the base station or remote unit) will release the TBF via a tear-down message comprising reserved bits. For example, as described in sections 9.3.2.6 and 9.3.3.5 of 3GPP TS 04.60 3rd Generation Partnership Project; Technical Specification Group GSM EDGE Radio Access Network; General Packet Radio Service (GPRS); Mobile Station (MS) - Base Station System (BSS) interface;Radio Link Control/ Medium Access Control (RLC/MAC) protocol, a base station terminates the TBF by setting a final block indicator bit (FBI) to '0'.

In accordance with the preferred embodiment of the present invention once data transmission has ceased, a transmitting entity will hold onto the TBF until it is released by the network. During delayed release of a downlink TBF, because data must be occasionally transmitted over the downlink data channels in order to obtain measurement data from the mobile and give the mobile opportunities to establish an uplink TBF, dummy Radio Link Control (RLC) data will be at least occasionally transmitted by the network during the time period that the network is holding the downlink TBF. During delayed release of an uplink TBF, the mobile is requested to occasionally transmit uplink blocks during the time period that the network is holding the uplink TBF. This time period allows the network to establish a downlink TBF and/or provides the mobile an opportunity to extend the uplink TBF without establishing another uplink TBF.

By temporarily delaying termination of a GPRS TBF, the probability of the receiving entity having a reply ready when the final polling occurs is increased. More particularly, during the normal operation or delayed release of a TBF between the network and a mobile, the GPRS RLC/MAC protocol allows establishment of the TBF in the opposite direction between the network and the same mobile significantly quicker than when no such TBF is already established. In typical Internet applications, an Internet data packet (IP packet) is transferred from the mobile to the network in an uplink TBF and the network generates a reply IP packet within several hundred milliseconds. If the mobile is still active in the uplink TBF when the network is ready to begin transmission of the reply, the downlink TBF needed to transfer the reply from the network to the mobile can be created much quicker than if the mobile were in idle mode and no uplink TBF was active. Thus, by holding the uplink TBF for a period of time after the last data has been transferred, significantly speeds up the establishment of the downlink TBF and so speeds up the transfer of the reply from the network to the mobile. A similar, although typically smaller speed up occurs in the opposite direction if the initial data is transferred from the network to the mobile.

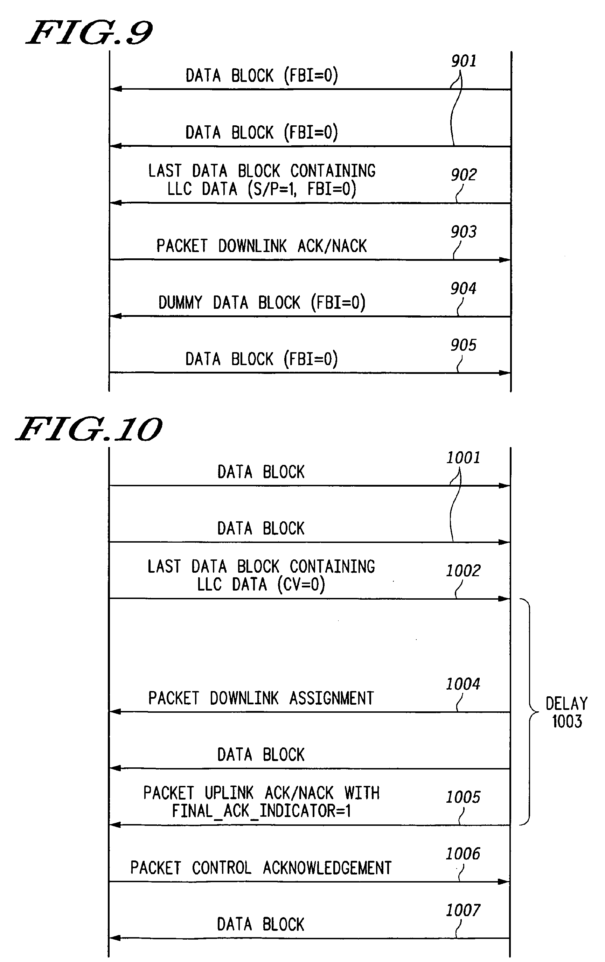

FIG. 8 illustrates a call-flow diagram for messaging/data transmission in accordance with the preferred embodiment of the present invention. As shown, downlink data transmission takes place via data blocks 801 during the first two transmissions from the base station. Next, when all data has been transmitted, the base station delays tearing down the TBF by sending the last data block containing LLC data 802 with the FBI bit set to 0 and with the S/P bit set to 1, which signals the remote unit to transmit a Packet Downlink Ack/Nack 803. The base station then periodically transmits dummy data blocks 804 to the remote unit with the S/P bit set to 1, which signals the remote unit to transmit a Packet Downlink Ack/Nack 805 to allow the remote unit to request establishment of an uplink TBF. When the base station receives the request to establish an uplink TBF, the base station sends the Packet Uplink Assignment message 806 to the remote unit. The remote unit then begins to transmit data blocks on the uplink TBF. Finally, the base station transmits a dummy data block with the S/P bit set to 1 and with the FBI bit set to 1 (807), signaling the remote unit to end the TBF. The remote unit responds with a Packet Downlink Ack/Nack message with the Final_Ack_Indicator bit set to 1 and then ends the TBF.

FIG. 9 illustrates a call-flow diagram where downlink data transmission takes place via data blocks 901 from the base station to the remote unit. When all data has been transmitted, the base station delays tearing down the TBF by requesting a Packet Downlink Ack/Nack 903 from the remote unit with the S/P bit set to 1 and the FBI bit set to 0 in the last data block containing LLC 902. The base station will periodically transmit dummy data 904 or new data blocks 905 to the remote unit without requiring a new downlink TBF establishment.

FIG. 10 illustrates a call-flow diagram where uplink data transmission takes place via data blocks 1001 from the remote unit to the base station. The remote unit indicates the transmission of the last data block 1002 by setting countdown value (CV) to 0. The base station delays 1003 the sending of the Packet Uplink Ack/Nack response 1005 to the remote unit for some time. If the base station receives a request to send data to the remote unit then the base station can establish the downlink TBF by sending a Packet Downlink Assignment message 1004. At a time of its choosing the base station initiates release of the uplink TBF by sending a Packet Uplink Ack/Nack 1005 and polling the mobile for a Packet Control Acknowledgement 1006. The base station continues to transmit data 1007 to the remote unit as the downlink TBF continues.

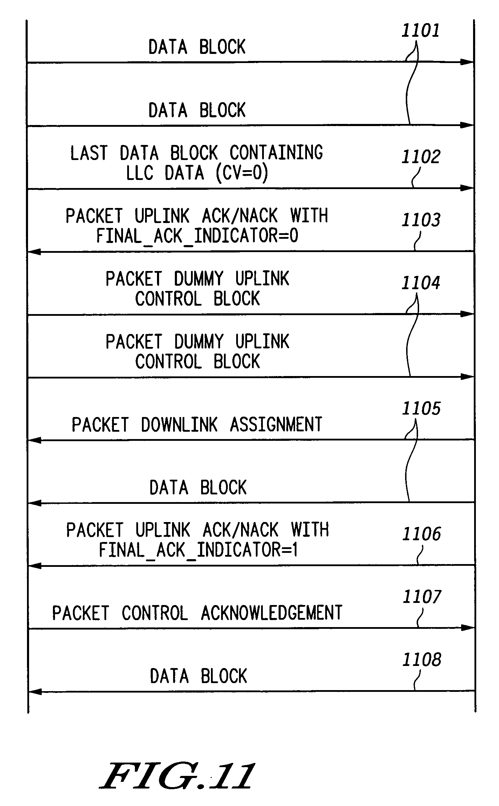

FIG. 11 illustrates a call-flow diagram where uplink data transmission takes place via data blocks 1101 from the remote unit to the base station. The remote unit indicates the transmission of the last data block 1102 by setting countdown value (CV) to 0. The base station sends the Packet Uplink Ack/Nack 1103 to the remote unit with Final_Ack_Indicator bit set to 0 without releasing the uplink TBF. The base station will periodically give the remote unit a chance to transmit data and if the remote unit has no data then the remote unit sends a dummy control block 1104. If the base station receives a request to send data to the remote unit then the base station can establish the downlink TBF 1105 and then initiate release of uplink TBF by sending a Packet Uplink Ack/Nack 1106 and polling the mobile for a Packet Control Ack 1107. The base station continues to transmit data 1108 to the remote unit.

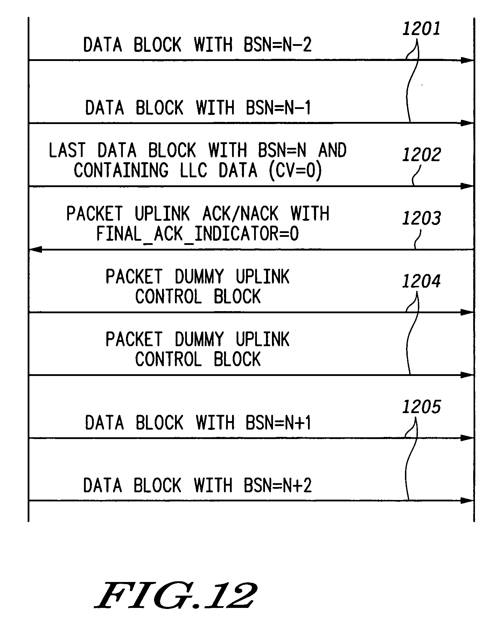

FIG. 12 illustrates a call-flow diagram where uplink data transmission takes place via data blocks 1201 from the remote unit to the base station. The remote unit indicates the transmission of the last data block 1202 by setting countdown value (CV) to 0. The base station sends the Packet Uplink Ack/Nack 1203 to the remote unit with Final_Ack_Indicator bit set to 0 without releasing the uplink TBF. The base station will periodically give the remote unit a chance to transmit data and if the remote unit has no data then the remote unit sends a dummy control block 1204 otherwise the remote unit transmits data blocks 1205.

The following paragraphs show modifications to the 3GPP TS 04.60 3rd Generation Partnership Project; Technical Specification Group GSM EDGE Radio Access Network; General Packet Radio Service (GPRS); Mobile Station (MS) - Base Station System (BSS) interface;Radio Link Control/ Medium Access Control (RLC/MAC) protocol standard in accordance with the preferred embodiment of the present invention. These changes are also described in detail in a paper presented to the 3GPP TSG meeting held on January 22-26 2001, agenda item 7.2.5.2, which is incorporated by reference herein.

### Section 9.3.1a Delayed release of downlink Temporary Block Flow

When the network exhausts its supply of downlink data for the downlink TBF, it may delay release of the downlink TBF (i.e., cease transmission of downlink RLC data blocks without releasing the TBF) or it may release the TBF by following the procedure in section 9.3.2.6 or 9.3.3.5.

In order to delay release of the TBF, if the last RLC data block containing valid LLC PDU data does not end on an LLC PDU boundary, it shall be filled using the procedure in section 10.4.16. The block shall then be sent to the mobile station with the FBI bit set to the value '0'. The network shall then maintain the release delayed TBF by sending downlink dummy RLC data blocks to the mobile station at least sufficiently often to prevent expiry of timer T3190, as required by power control requirements, and as needed to poll the mobile station for requests to establish an uplink TBF.

If the network has delayed the release of the downlink TBF, when the network has new data to transmit on the downlink TBF, it shall cease transmission of the downlink dummy RLC data blocks and resume transmission of RLC data blocks.

If the network has delayed the release of the downlink TBF and it wishes to release the TBF, it shall use the procedure in section 9.3.2.6 or 9.3.3.5, using downlink dummy RLC data blocks in place of RLC data blocks if no RLC data blocks are available.

Once the network has sent an RLC data block or downlink dummy RLC data block with the FBI bit set to the value '1', delayed release of the TBF is no longer possible.

### Section 10.2.1a Downlink Dummy RLC data block

The downlink dummy RLC data block is composed of a CS-1 RLC data block with one length octet indicating the LLC PDU ends at the end of the RLC data block, and with the RLC data field containing a 19 octet Dummy LLC PDU (see GSM 04.64).

### Section 10.3a.5 EGPRS Downlink Dummy RLC data block

The EGPRS downlink dummy RLC data block is composed of an RLC data block with one length octet indicating the LLC PDU ends at the end of the RLC data block, and with the RLC data field containing a Dummy LLC PDU (see GSM 04.64) of sufficient size as to completely fill the RLC data field.

### Section 10.4.16 RLC data field

The RLC data field contains octets from one or more LLC PDUs. The RLC data field may contain parts of one or two LLC PDUs and all of an arbitrary number of LLC PDUs. The E bit, the M bit, and the Length Indicator delimit the RLC data field into LLC PDUs.

If the last LLC PDU of the TBF does not fill the entire RLC data field, an extension octet shall be used to indicate the number of valid RLC data octets and the remainder of the RLC data field shall be filled with filler octets with the value '00101011'. Only the last RLC data block of the TBF may contain filler octets.

If the TBF is ending and there is no new LLC data to transmit and the LLC PDU, along with the length octet indicating the LLC boundary, does not completely fill the entire RLC data field, an extention octet shall be used with the length field indicating the end of the RLC data block, and the remainder of the RLC data field shall be filled according to the following rules:
If, after the length octet is inserted, no more octets are required, nothing shall be done.
If 1 or more octets of filler are needed, a Dummy LLC PDU (GSM 04.64) of sufficient length to precisely fill the reamaining octets shall be inserted.

### Section 6.5Dummy LLC PDU

The dummy LLC PDU is formatted as shown in Figure 12. All octets from octet 4 to octet 74 have the same value. This PDU is recognized by the receiving LLC entity as an invalid PDU and is discarded. If a 1 octet dummy LLC PDU is needed, octet 1 is used. If a 2 octet LLC PDU is needed, octet1 and octet 2 are used, etc. The dummy LLC PDU is at most 74 octets long. The dummy LLC PDU may be inserted into the LLC data stream by lower layer protocols without affecting the operation of the LLC protocol.
NOTE: The dummy LLC PDU is a UI frame with C/R = 1, which is a command in SGSN to MS direction and a response in the MS to SGSN direction. The SAPI is 3, which is User Data 1. The LLC sequence number N(U) is 0. Encryption is not enabled. The PM bit is 1, which indicates that the LLC header is protected by the LLC FCS. No matter how may of the octets are included in the dummy LLC PDU, the FCS is either not present or is invalid, which invalidates the entire LLC PDU. The information field contains the hexadecimal value 2B, which is the preferred fill pattern for optimizing the air interface physical layer performance.

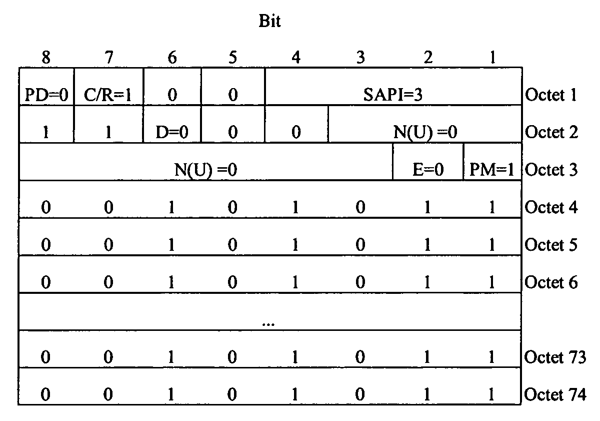

While the invention has been particularly shown and described with reference to a particular embodiment, it will be understood by those skilled in the art that various changes in form and details may be made therein without departing from the spirit and scope of the invention and it is intended that all such changes come within the scope of the following claims:

## Claims

1. A method for data transmission within a wireless communication system, the method comprising the steps of:
transmitting data to a first receiver over a first plurality of frames on a data channel, wherein the first plurality of frames are assigned to the first receiver;
transmitting data to the first receiver, over a frame on the data channel for a period of time, wherein;
the frame is assigned to a second receiver;
the frame is not part of the first plurality of frames;
the period of time is based on a time to transfer from a hold state to an active state; and
transmitting second data to a second receiver over the frame.

2. A method for data transmission within a wireless communication system, the method comprising the steps of:
receiving data via a first receiver from over a first plurality of frames on a data channel, wherein the first plurality of frames are assigned to the first receiver;
receiving data via the first receiver, over a frame on the data channel for a period of time, wherein;
the frame is assigned to a second receiver;
the frame is not part of the first plurality of frames; and
the period of time is based on a time to transfer from a hold state to an active state.

3. An apparatus for data transmission within a wireless communication system, the apparatus comprising:
means for transmitting data over a first plurality of frames on a data channel, wherein the first plurality of frames are assigned to the first receiver;
means for transmitting data over a frame on the data channel for a period of time, wherein;
the frame is assigned to a second receiver; and
the frame is not part of the first plurality of frames.

4. A method for data transmission within a General Packet Radio Service (GPRS) communication system, the method comprising the steps of:
establishing a temporary block flow (TBF) between a transmitting device and a receiving device to transmit data over a data channel;
determining that no more data needs to be transmitted to the receiving device; and
delaying termination of the TBF by transmitting dummy data over the data channel.

5. A base station or a mobile unit comprising:
means for establishing a temporary block flow (TBF) between a transmitting device and a receiving device to transmit data over a data channel;
means for determining that no more data needs to be transmitted to the receiving device; and
means for delaying termination of the TBF by transmitting dummy data over the data channel.

6. A method for data transmission within a wireless communication system, the method comprising the steps of:
transmitting data over a wireless data channel at a data rate;
determining that no more data needs to be transmitted; and
delaying dropping the data channel for a time period based on the data rate.

7. The method of claim 6 wherein the step of transmitting data over the wireless data channel comprises the step of transmitting data over a Code Division Multiple Access (CDMA) Supplemental Channel.

8. The method of claim 6 wherein the step of delaying dropping the data channel for a time period based on the data rate comprises the step of delaying dropping the data channel for a time period, wherein the time period is proportional to the data rate.

9. A method for data transmission within a Code Division, Multiple Access (CDMA) wireless communication system, the method comprising the steps of:
operating a data transmitter in a CDMA Active state;
determining that no more data needs to be transmitted over a CDMA supplemental channel;
prior to operating the data transmitter in a Control Hold state, delaying transition to the Control Hold state for a period of time, wherein the period of time is based on a data rate; and
operating the data transmitter in a Control Hold state.

10. The method of claim 9 wherein the step of operating the data transmitter in the CDMA Active state comprises the step of transmitting via a dedicated control channel and a CDMA supplemental channel.

11. The method of claim 10 wherein the step of operating the data transmitter in the Control Hold state comprises the step of transmitting via a dedicated control channel only.

12. An apparatus comprising:
channel circuitry for transmitting data; and
a timer coupled to the channel circuitry, wherein the timer delays deactivation of the channel circuitry after data transmission for a period of time, wherein the period of time is based on a data rate.

13. The apparatus of claim 12 wherein the period of time is proportional to the data rate.

14. The apparatus of claim 12 wherein the channel circuitry comprises CDMA fundamental channel circuitry.
